# EUROPÄISCHE PATENTSCHRIFT

(11) **EP 2 844 183 B1**
(45) Veröffentlichungstag und Bekanntmachung des Hinweises auf die Patenterteilung: **11.01.2017**
(21) Anmeldenummer: 13717719.2
(22) Anmeldetag: 18.04.2013
(51) Int. Cl.: A61C 3/02, B23C 5/10, A61C 13/00

(54) **FRÄSVERFAHREN ZUM HERSTELLEN VON ZAHNERSATZTEILEN**
MILLING METHOD FOR PRODUCING DENTAL PROSTHESIS PARTS
PROCÉDÉ DE FRAISAGE PERMETTANT DE PRODUIRE DES PIÈCES DE PROTHÈSE DENTAIRE

(30) Priorität: 04.05.2012 DE 102012009038
(43) Veröffentlichungstag der Anmeldung: 11.03.2015
(73) Patentinhaber: Hufschmied Zerspanungssysteme GmbH, 86399 Bobingen (DE)
(72) Erfinder: HUFSCHMIED, Ralf, 86399 Bobingen (DE)
(74) Vertreter: Munk, Ludwig
(86) Internationale Anmeldenummer: PCT/EP2013/001153
(87) Internationale Veröffentlichungsnummer: WO 2013/164068

(56) Entgegenhaltungen:
- EP-A1- 1 810 637
- EP-A1- 2 404 689
- WO-A1-2004/086999
- US-A- 5 685 671

## Beschreibung

Die Erfindung betrifft ein Fräsverfahren zum Herstellen von Zahnersatzteilen gemäß dem Oberbegriff des Anspruchs 1.

Bekannte Dentalfräser haben einen Kugelkopfabschnitt mit gebogenen Schneidenabschnitten und einen daran anschließenden Axialschneidabschnitt mit gewendelten Schneidenabschnitten und sind durchmessermäßig auf aus vorgesinterten Keramikweißlingen, insbesondere Zirkondioxidweißlingen herauszuarbeitenden Zahnersatzteile abgestimmt. D.h., dass der Durchmesser des Kugelkopfs, mit dem das Zahnimplantat oder dergleichen erzeugt werden soll, so gewählt ist, dass sich damit die keiner einfachen Grundform folgende, sondern mit dreidimensional gekrümmten Flächen und Einkerbungen versehene Zahngeometrie überhaupt erstellen lässt, und das mit der erforderlichen Oberflächenglattheit. Zu klein kann der Durchmesser jedoch schon aus Festigkeitsgründen nicht gewählt werden. Ein für die Bearbeitung von ungebrannten Hochleistungskeramiken wie Zirkonoxid und Aluminiumoxid vorgesehener Dental-Stirnradiusfräser ist beispielsweise dem Katalog 2009, S. 70 der Fa. Datron AG unter der Bezeichnung "DATRON VHM-Zirkonoxid-Dentalfräser" zu entnehmen.

Zur Herstellung der Zahnersatzteile, wie z.B. Zahnimplantaten werden dabei sinterbare Keramiken eingesetzt, aufgrund guter hygienischer Eigenschaften und Festigkeitswerten heutzutage Zirkondioxid-Vollkeramiken. Dabei wird ein ungesinterter Keramikrohling, ein sogenannter Grünling, bis zu einem gewissen formstabilen Härtegrad vorgesintert, also zu einem sogenannten Weißling, bei dem eine Bearbeitung mit Dentalfräsern noch ohne Weiteres möglich ist, die beim Sintern bis zum Härtegrad des Weißlings auftretende Schrumpfung aber schon vor der endgültigen Formgebung vollzogen ist. Aus dem Weißling wird dann ein noch zum fertigen Zahnimplantat durch zu sinternder, aber schon in der Form des endgültigen Zahnimplantats vorliegender Zahnimplantatweißling herausgesintert. Neben Zahnimplantaten werden auf gleiche Weise auch Brücken und andere Zahnersatzteile bzw. Dentalrestaurationen, insbesondere die Tragegerüste für Kronen aus Zirkoniumoxid, genauer gesagt Zirkondioxid-Vollkeramiken hergestellt, welche neben den polykristallin vorliegenden Zirkondioxiden noch weitere Stabilisierungsoxide, wie z.B. Yttrium- oder Magnesiumoxid aufweisen, wie z.B. 3Y-TZP, YSZ oder TZ-3Y. Nach der Formgebung durch Freiformfräsen am vorgesinterten Weißling wird das entstandene vorgesinterte Zahnersatzpräparat bzw. der Zahnersatzteilweißling dann vollständig dichtgesintert, wobei die dabei auftretende Sinterschwindung bzw. der Volumenschwund (oft ca. 50%) bei der vorab erfolgenden Formgebung im Fräsprozess berücksichtigt sein muss, da das dichtgesinterte Material nicht mehr oder nur noch in engen Grenzen bearbeitet werden kann, ohne dass die Struktur der Keramik Schaden nimmt.

Zur Fräsberarbeitung der Zahnersatzweißlinge sind manuelle Bearbeitungsverfahren wie manuelles Kopierfräsen bekannt.

Dabei wird zunächst im Dentallabor ein Kunststoff- oder Gipsmodell des Gebisses angefertigt, etwa aus einem von einem Zahnarzt genommenen Gebissabdruck. Zum Abtrennen übers chüssigen Materials bei der Fertigstellung solcher Modelle aus relativ weichem, oft aber anhaftendem Material stehen dem Zahntechniker freihandgeführte Druckluft-Turbinenschleifer zur Verfügung. Dabei werden meist Fräswerkzeuge mit knospenförmigen, häufig kreuzverzahnten, rechts- oder linksverdrallten, relativ großen Schleifköpfen in der Größenordnung eines Zahns mit breiten und tiefen Spannuten eingesetzt, um ein Zusetzen zu verhindern. Der Schleifkopf ist dabei auf einen wesentlich dünneren Schaft aufgelötet, so dass über den ganzen Umfang geschnitten werden kann. Ein solches Werkzeug ist bespielsweise der Produktionformation "Hartmetallfräser SGFA, 2007" der Firma Brasseler GmbH & Co. KG zu entnehmen.

Anschließend kann dann das Modell abgetastet und parallel hierzu der entsprechende Zahnersatzteilweißling aus der vorgesinterten Zirkondioxidronde- oder -platte herausgefräst werden. Dentalfräser und Abtaster sind dabei parallel zueinander auf einer entsprechenden Kopierfräsmaschine, z.B. Tizian Mill der Firma Schütz GmbH eingespannt, wobei Unterschnitte am Zahnersatzweißling durch eine Schwenkbarkeit der Arbeitsplatte hergestellt werden können, jedoch Werkzeugwechsel zum Grob- und Feinbearbeiten und zum manuellen Nacharbeiten, sowie verschiedene Einspannungen der Arbeitsplatte nötig sind.

Auch im Dentalbereich setzen sich immer mehr CNC-Fräsverfahren durch, bei denen anhand von CAD/CAM-Daten Verfahrwege generiert werden, die auf mehrachsigen CNC-Fräsmaschinen von der Maschine dreidimensional abgefahren werden können, wobei neben den drei Bewegungsachsen moderne CNC-Fräsmaschinen meist auch noch zwei weitere Schwenkachsen aufweisen, so dass Hinterschnitte hergestellt werden können. Die CAD/CAM-Daten werden dabei aus dem eingescannten Modell oder dem beispielsweise vom Zahnarzt eingescannten Gebiss gewonnen, so dass man hier von einem computergestützten Kopierfräsen sprechen kann, wobei der Modellbau eingespart werden kann und auch beim Fräsen selbst weniger von Hand zu erledigen ist.

So ist es bespielsweise aus der deutschen Patentschrift DE 696 25 012 T2 bekannt, Dentalformen mittels CAD-/CAM-generierter Verfahrwege aus einem geeigneten Substrat herauszuschneiden und zwischen Paaren dieser Formteile ein polymerisierbares Acrylatmaterial einzufügen, um daraus einen Kunstzahn mit verschiedenen Schichten zu bilden, z.B. Zahnschmelz-, Shade- und einer Rückenschicht. Als Substrat für die Formen wird dabei u.a. z. B. Keramik vorgeschlagen. Der Kunstzahn selbst wird nicht aus dem Substrat herausgefräst, sondern zwischen Zahnformen aus polymerisierbarem Acrylatmaterial herangeformt.

Andere maschinelle 3D-Form- bzw. -Freiformfräsverfahren dienen der Direkterstellung von Dentalkeramiken (weißgesintert) durch Herausfräsen des Zahnersatzteils aus vorgesinterten Keramikweißlingen, wobei das Zahnersatzteil anschließend durchgesintert wird. Ein solches Verfahren ist beispielsweise der internationalen Patentanmeldung WO2004/086999A1 zu entnehmen.

Hierfür werden meist Schaftfräser mit einem halbkugelförmig abgerundeten Kugelkopfabschnitt und ein bis vier rechtsverdrallten Spannuten eingesetzt, welche entsprechend ein bis vier Schneiden an den Außenkanten der zwischen den Spannuten angeordneten Schneidkanten aufweisen. Zur Herausarbeitung des Zahnersatzteilweißling wird der Fräser zweckmäßig von oben ans volle Material der jeweiligen vorgesinterten Keramikronde angesetzt, und dann Zug um Zug ins Volle verfahren.

Dabei treten jedoch relativ häufig Abplatzungen bzw. Ausbrüche an der teilgesinterten und damit schon relativ spröden Keramik auf. Diese Ausbrüche am Weißling sind für den Dentaltechniker damit gleichzeitig das Wechselkriterium für das Werkzeug, weil nicht mit Sicherheit bestimmt werden kann, ob das Werkzeug stumpf geworden ist oder die Abplatzung von durch die Fräsbearbeitung auf die Keramik aufgebrachten Kräfte herrührt.

Zwar sind aus der Bearbeitung von relativ weichen Werkstoffen wie z.B. Kunststoff, Holz oder wie obenstehend angesprochen, von Gips, auch linksverdrallte Fräser bekannt, welche den Vorteil bieten würden, dass beim Fräsen keine Zugkraft auf das Werkstück wirkt, wobei gerade Zugkräfte bei der Bearbeitung von Keramiken zu Abplatzungen führen, da Keramiken der eingangs genannten Art auch im weiß vorgesinterten Zustand eine relativ niedrige Zugfestigkeit aufweisen. Ein Beispiel für einen linksverdrallten, zur Bearbeitung von Kunststoff, Aluminium, Messing oder Kupfer vorgesehenen Fräser ist beispielsweise dem Katalog 2009, S. 14 der Fa. Datron AG unter der Bezeichnung "DATRON VHM-Einschneider, Linksspiral rechtsschneidend" zu entnehmen. Der Fräser ist im Sinne der für die Bearbeitung dieser Werkstoffe üblichen großen Spannutbreite und Tiefe als Einschneider ausgeführt. Solche Werkzeuge können jedoch nur eingesetzt werden, wenn die Spanabfuhr nach unten hin möglich ist, also nicht in Bearbeitungsfällen wie dem 3D-Freiformfräsen, bei dem der Fräser von oben ans volle Material angesetzt wird, sondern lediglich in Bearbeitungsfällen, bei denen ein Werkstück an seinen vertikalen Außenrändern bearbeitet wird und die Späne nach unten abgeführt werden können. Denn durch die Linksverdrallung wird zwar vorteilhaft zugkraftfrei gearbeitet. Die Späne werden dadurch aber nach unten gedrückt und würden daher zum Verstopfen des Werkzeugs führen, wenn die Spanabfuhr nach unten nicht möglich ist.

Hiervon ausgehend ist es Aufgabe der vorliegenden Erfindung, ein Fräsverfahren der gattungsgemäßen Art derart weiterzubilden, dass sich erhöhte Standzeiten des Werkzeugs und eine höhere Prozessstabilität bei der Fräsbearbeitung ergibt.

Diese Aufgabe wird mit den Merkmalen des Anspruchs 1 gelöst.

Das erfindungsgemäße Fräsverfahren zeichnet sich dadurch aus, dass die Fräsbearbeitung mit einem linksverdrallten Dentalfräser erfolgt, wobei ein plattenförmiger Keramikweißling aufgespannt wird und dann mit dem Dentalfräser von oben an und dann in das volle Material des plattenförmigen Keramikweißlings gefahren wird und anschließend durch schichtmäßiges Abtragen von Material entlang der CAD/CAM-generierten Verfahrwege der Zahnersatzteilweißling aus dem plattenförmigen Keramikweißling herausgefräst wird. Der erfindungsgemäß verwendete, linsverdrallte Dentalfräser hat eine linksverdrallte Spiralgeometrie, das heißt, die sich vom Kugelkopfabschnitt entlang des Axialschneidabschnitts erstreckenden drei oder bevorzugt zwei Spannuten und Schneidkeile sind mit einem Linksdrall, also entgegen der Drehrichtung um den Fräserkern herumgewendelt, insbesondere mit einem Linksdrall von 1° bis 45° oder bevorzugt von 5° bis 30° zur Fräserachse.

Dem liegt die überraschende Erkenntnis zu Grunde, dass gerade bei den im Dentalbereich verwendeten Sinterkeramiken ein Fräsen unter Linksdrall auch dann möglich ist, wenn die Späneabfuhr nach unten nicht gesichert ist. Denn diese Keramiken, z.B. in Form von Zirkondioxid-Weißlingen, zerspanen beim Fräsen staubförmig und verstopfen daher ein Bohr- bzw. Fräsloch auch dann nicht, wenn mit linksverdrallten Dentalfräsern von oben ins volle Material gefahren wird, wie dies beim Herausfräsen von Zahnersatzteilweißlingen aus vorgesinterten Keramikronden der Fall ist. Ein Spänestau tritt dabei nicht auf. Es kommt vielmehr zu dem positiven Nebeneffekt, dass die Einspannung der Weißlingsronden wenigen Kräfte aufnehmen muss als bisher, da keine die Ronde bzw. Platte nach oben abhebenden Zugkräfte auftreten, sondern Druckkräfte. Bisher vielfach verwendete, aber relativ teuere Vakuumaufspannungen per Ansaugung der Ronde oder Platte können dann durch einfachere Aufspannungen ersetzt werden.

Durch die Linksverdrallung werden über die Schneiden keine Zugkräfte mehr auf den zu bearbeitenden Weißling aufgebracht, sondern ausschließlich Druckkräfte. Die häufigen Abplatzungen am Weißling und Werkzeugwechsel vor Erreichen der Verschleißgrenze müssen daher nicht mehr hingenommen werden. Da die sinterbaren Dentalkeramiken wie Zirkondioxidzahnkeramik im Gegensatz zu ihrer geringen Zugfestigkeit über eine sehr hohe Druckfestigkeit verfügen, wird das Entstehen von Abplatzungen auch bei dünnen Geometrien am Werkstück vermieden. Dadurch können jetzt nicht nur wesentlich filigranere Zahnersatzteile im Freiformfräsverfahren bei erhöhter Prozessstabilität hergestellt werden, sondern es steigt auch die Standzeit der Werkzeuge stark an, da jetzt erst bei einer realen Verschleißbildung am Werkzeug gewechselt werden muss, und nicht mehr wie bisher davon ausgegangen werden muss, dass die Ausbrüche am Werkstück auf einen Verschleiß des Werkzeugs zurückzuführen sind, obwohl diese prinzipbedingt auch mit einem nichtverschlissenen Werkzeug auftreten. Gleichzeitig tritt aufgrund der staubförmigen Zerspanung das Spänestauproblem gar nicht erst auf. Nach dem Fräsen kann der Zahnersatzteilweißling aufgrund der hohen Fräsgenauigkeit direkt zum fertigen Zahnersatzteil durchgesintert werden, also ohne dass nachbearbeitet werden muss.

Durch die Kugelkopfgeometrie kann der Einsatzpunkt bzw. -bereich über die komplette Halbkugel an dem freien Ende des Dentalfräsers wandern, wobei sich Einsatzbreiten von 0,1 bis 0,8 mal den größten Außendurchmesser des Dentalfräsers im Kugelkopfabschnitt bewährt haben. Es wird also vorteilhaft kein Vollschnitt ausgeführt, sondern lediglich ein Teilschnitt mit 0,1 bis 0,8 mal dem größten Außendurchmesser als Einsatzbreite, wobei der Einsatzbereich, also der Bereich, in dem die Schneiden im Material bleiben, über die komplette vom Kugelkopfabschnitt abgestriffene Halbkugel und über den von dem daran anschließenden Axialschneidabschnitts abgestriffenen Zylinder wandern kann.

Als Länge für die scharfen Schneiden hat sich dabei ein Wert von 0,5 bis 1,5 mal dem größten Außendurchmesser als ausreichend erwiesen, da beim schichtweisen Abtragen im 3D-Formfräsverfahren selten mit einer höheren Schnitttiefe zu rechnen ist.

Um den Anforderungen an die Fertigungsgenauigkeit einerseits und die Werkzeugfestigkeit andererseits beim Fräsbearbeiten von Keramikweißlingen zu erfüllen, haben sich Werte von ca. 1 bis 4 mm, bevorzugt 2 bis 3 mm für den größten Außendurchmesser des Kugelkopfabschnitts und damit gleichzeitig für den konstanten Außendurchmesser des an den Kugelkopfabschnitt mit diesem Außendurchmesser anschließenden Axialschneidabschnitts als geeignet erwiesen, insbesondere wenn der Dentalfräser insgesamt einstückig urgeformt aus einem Material wie z.B. Hartmetall besteht, also keine Sollbruchstellen in Form von Lötverbindungen aufweist. Beim Fräsen von Zahnersatzteilweißlingen ist dann keine zusätzliche Feinbearbeitung mehr nötig.

Besonders bevorzugt ist an jeder der Schneiden ein Freischliff vorgesehen, vorzugsweise von 0,1 mm Breite oder kleiner und besonders bevorzugt mit einem Freiwinkel von 12° bis 25°. Dadurch können über die gesamte maximale Schnittlänge, welche bevorzugt kleiner als 0,5 bis 1,5 mal den größten Außendurchmesser ist, feinste Details am Zirkondioxidweißling gefräst werden, um so zu einem hochgenauen Abbild der CAD/CAM-Daten am Zahnersatzteilweißling bei bester Oberflächengüte und damit ohne Nachbearbeitung zu kommen.

Als geeignete Werte für den Spanwinkel, um die Schnittkraft bei dem hier skizzierten Anwendungsfall in die richtige Bahn und Größe zu lenken, haben sich

Werte von 8° bis 25° erwiesen, wobei es für die Tiefe der Spannuten im Hinblick auf die staubförmige Zerspanung des weiß vorgesinterten Keramikmaterials ausreichend und im Hinblick auf die Werkzeugfestigkeit vorteilhaft ist, wenn ein Kerndurchmesser im Axialschneidabschnitt ca. 40 bis 65%, bevorzugt 50% - 65% oder sogar 55% - 65% des größten Außendurchmessers beträgt, wenn also der nicht von den Spannuten erfasste, runde Werkzeugkernabschnitt einen Außenumfang mit einem Durchmesser von ca. 40 bis 65% bevorzugt 50% - 65% oder sogar 55% - 65% des Außenumfangs des Werkzeugs im Axialschneidabschnitts und am Übergang zum Kugelkopfabschnitt aufweist. Dadurch gewinnt der Dentalfräser an Steifigkeit, wobei es aufgrund der staubförmigen Zerspanung des vorgesinterten Keramikmaterials trotz der geringen Tiefe der Spannut zu einer ausreichenden "Spanabfuhr" bzw. Materialabfuhr kommt.

In Zusammenhang mit der Gestaltungen der Spannuten im Hinblick auf eine hohe Werkzeugstabilität und des geringen Bedarfs an Spanvolumen aufgrund der staubförmigen Zerspanung des vorgesinterten Keramikmaterials ist es dabei insbesondere bei einem als Zweischneider ausgebildeten Dentalfräser vorteilhaft, wenn zumindest im Axialschneidabschnitt der rückseitige Übergang vom Außendurchmesser an der Schneide auf den Kerndurchmesser in der Spannut über einen Übergangsbereich erfolgt, welcher insbesondere bogenabschnittsförmig ausgebildet sein kann, wobei der um 90° in Umfangsrichtung zum größten Außendurchmesser an den Schneiden versetzte Außendurchmesser am Übergangsbereich 65% bis 85%, insbesondere ca. 75% des größten Außendurchmessers beträgt, so dass das Werkzeug zusätzlich ausgesteift wird. Mit derartigen Werkzeugen lassen sich beim Freiformfräsen von Zirkondioxiddentalkeramiken Drehzahlen von bis zu 50.000 ^{U}/ₘᵢₙ fahren.

Weiterhin hat sich gezeigt, dass es für bestimmte Anwendungsfälle vorteilhaft sein kann, wenn der Dentalfräser eine kleine Querschneide aufweist. Denn dadurch wird das Eintauchen in das Material erleichtert und der Druck beim Eintauchen etwas abgebaut. Dies zeigt sich insbesondere bei sehr tiefen Z-Zustellungen. Ohne Querschneide setzte sich in Versuchen Zirkonstaub im Zentrum an der Fräserspitze ab und verursachte schlechtere Oberflächen. Durch geeignete CAM-Strategien (z.B. "zirkulares Eintauchen") kann dieses Problem aber ebenso vermieden werden wie durch das Vorsehen einer Querschneide am Dentalfräser.

Weitere vorteilhafte Weiterbildungen der Erfindung werden anhand der beiliegenden Zeichnungen erläutert, die eine vorteilhafte Ausführungsform der Erfindung zeigen.
- Figur 1: zeigt eine Seitenansicht eines gemäß einer vorteilhaften Ausführungsform der Erfindung verwendeten Dentalfräsers ; und
- Figur 2: eine Stirnansicht des in Figur 1 gezeigten Dentalfräsers in vergrößerter Darstellung und unter Weglassung des Fräserschafts.

Der in den Figuren gezeigte Dentalfräser weist einen Kugelkopfabschnitt 1, einen Axialschneidabschnitt 2 und einen Schaftabschnitt 3 auf. Der Schaftabschnitt 3 hat einen Durchmesser Ds welcher größer ist als ein konstanter Außendurchmesser Dk im Axialschneidabschnitt, also ein Durchmesser Dk, den der Außenumfang des Dentalfräsers im Axialschneidabschnitt 2 aufweist. Der Kugelkopfabschnitt 1 des Dentalfräsers ist dabei halbkugelförmig abgerundet und geht mit seinem größten Außendurchmesser, der gleichzeitig dem Durchmesser Dk des Axialschneidabschnitts 2 entspricht, in den Axialschneidabschnitt 2 über.

Ausgehend vom freien Ende des Dentalfräsers am halbkugelförmig abgerundeten Kugelkopfabschnitt 1 weist der Dentalfräser entlang seines Axialschneidabschnitts 2 zwei spiralförmig gewendelt verlaufende Spannuten 4 und zwei durch die Spannuten getrennte Schneidkeile 5 auf, welche mit einem Drallwinkel b von im dargestellten Beispiel 25° linksverdrallt sind, also entgegen der für den Dentalfräser vorgesehenen Drehrichtung. An den in Rechsdrehrichtung der vorgeordneten Spannut 4 zugewandten Außenkanten der Schneidkeile 5 erstreckenden sich Schneiden 6. Am freien Ende des Dentalfräsers sind die beiden Schneiden 6 über eine kurze Querschneide 10 verbunden.

Wenn im Rahmen der vorliegenden Erfindung von einem halbkugelförmig abgerundeten Kugelkopfabschnitt gesprochen wird, so bedeutet das, dass die Abrundung dort entlang der Schneiden 6 des (im dargestellten Beispiel zweischneidigen) Dentalfräsers verläuft, oder mit anderen Worten, dass der Dentalfräser bei Seitenansicht und entsprechender radialer Positionierung der beiden Kanten eine in etwa halbkreisförmige Kontur im Kugelkopfabschnitt aufweist. Die sich am freien Ende des Dentalfräsers in Querrichtung erstreckenden Schneiden 6 gehen dabei mit einem Radius, der in etwa dem halben Außendurchmesser Dk des Dentalfräsers im Axialschneidabschnitt 2 entspricht, in die dort spiralförmig um die Axialrichtung gewendelt verlaufenden Schneidenabschnitte über.

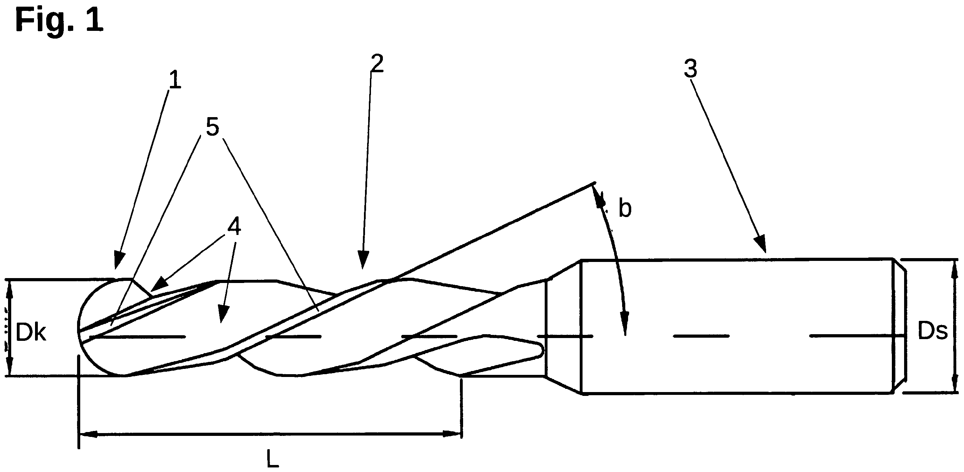

Dadurch wird gewährleistet, dass der Dentalfräser unter jedem gewünschten Winkel zum Werkstück mit über den Kugelkopfabschnitt 1 wanderndem Einsatzbereich eingesetzt werden kann. Dabei erstrecken sich die scharfen Schneiden 6 über einen Bereich des Axialschneidabschnitts, der kleiner als die in der Figur 1 eingezeichnete Länge L ist, welche die Länge der Spannuten zuzüglich des sich bis zum Übergang zum Schaftabschnitt 3 erstreckenden Auslaufs wiedergibt.

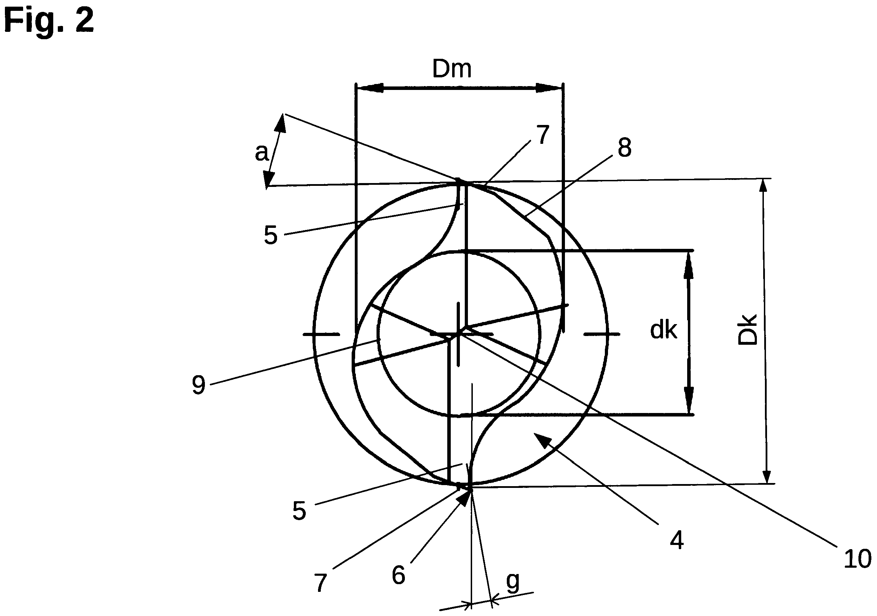

Die scharfen Schneiden 6 erstrecken sich im dargestellten Beispiel über eine Länge, die dreimal dem größten Außendurchmesser Dk des Kugelkopfabschnitts 1 bzw. dem Durchmesser Dk des Außenumfangs des Axialschneidabschnitts 2 entspricht, so dass auch über eine relativ große Länge an den sich mit dem Linksdrall der Spannuten 4 gewendelt erstreckenden Abschnitten der Schneiden 6 gefräst werden kann. Dabei ist, wie in Figur 2 zu entnehmen ist, an den Schneiden 6 rückseitig ein Freischliff 7 vorgesehen, im dargestellten Beispiel mit einem Freiwinkel a von 20°. Durch den Freischliff 7 wird auch über die relativ große Länge der scharfen Schneiden 6 eine hohe Oberflächenqualität am zu bearbeitenden Keramikweißling sichergestellt, wobei sich eine an den Freischliff 7 rückseitig anschließende Freifläche 8 und ein wiederum daran anschließender, bogenabschnittsförmig nach außen ausgebauchter Übergangsbereich, über den der Übergang in die jeweilige Spannut 4 erfolgt, als vorteilhaft für geringe Vibrationen und eine hohe Steifigkeit des Werkzeugs erwiesen hat.

Der in den Spannuten 4 als Spanvolumen zur Verfügung stehende Raum ist dabei zwar relativ klein. Da das zu bearbeitende vorgesinterte Keramikmaterial, insbesondere Zirkondioxid aber staubförmig zerspant kann dies zu Gunsten der vorstehend genannten Steifigkeit des Werkzeugs hingenommen werden. Auch die maximale Tiefe der Spannuten 4 ist dabei relativ klein, wenn man einen Kerndurchmesser dk eines Fräserkernabschnitts 9 (also den Durchmesser des Dentalfräsers an der tiefsten Stelle der Spannuten 4) mit dem Außendurchmesser Dk im Axialschneidbereich vergleicht, wobei dieses Verhältnis im dargestellten Beispiel bei ca. 55% liegt. Auch dies kommt der Standzeit des Dentalfräsers zu Gute. Angemerkt sei, dass der innere Kreis in Fig. 2 lediglich zur Veranschaulichung des Kerndurchmessers dk eingezeichnet wurde und kein körperlich vorhandenes Merkmal darstellen soll.

Für den gewünschten Einsatzzweck zur Bearbeitung von Zirkondioxidweißlingen im Dentalbereich hat sich dabei eine Gestaltung des Dentalfräsers als Zweischneider als vorteilhaft im Sinne geringer Vibrationen erwiesen, wenngleich auch dreischneidige Varianten denkbar wären.

Durch die Linksverdrallung der Spannuten 4 bzw. der Schneiden 6 an den Schneidkeilen 5 wird dabei eine Zugbelastung des zu bearbeitenden Keramikweißlings vermieden, wodurch nicht nur deutlich bessere Oberflächengüten erzielt werden können, sondern auch höhere Zerspanvolumen pro Zeiteinheit erreicht werden können, als mit im Dentalbereich bisher üblichen, rechtsverdrallten Bohrern.

Die Figuren sind nicht maßstabsgetreu. So hat der dargestellte Schaftfräser einen Außendurchmesser Dk im Axialschneidabschnitt 2 bzw. am Ende des

Kugelkopfabschnitts 1 von 2 mm. Für den Außendurchmesser Dk haben sich dabei für den Anwendungsfall des 3D-Freiformfräsens von weiß gesinterten Zirkondioxidkeramiken Werte von 1 bis 4mm, bevorzugt 2 bis 3mm, beispielsweise 2mm als vorteilhaft erwiesen, um die für Zahnersatzteile, wie z.B. Zahnimplantate, Brücken oder ähnliches nötigen Oberflächengüten und Maßgenauigkeiten bei gleichzeitig hohen Spanvolumen pro Zeiteinheit zu erzielen.
Mit dem dargestellten Werkzeug können dabei sämtliche Arbeitsschritte durchgeführt werden, das heißt nach dem sichtmäßigen Abtragen von Material mit dem von oben an den Keramikweißling angesetzten Dentalfräser ist keine zusätzliche Feinbearbeitung mehr nötig. Das Zahnersatzteil kann also ohne Werkzeugwechsel und damit mit geringer Fertigungszeit hergestellt werden, wobei besonders die Linksverdrallung und die damit einhergehende, fehlende Zugbelastung zu einer geringen Neigung zu Abplatzungen und damit einer hohen Oberflächenqualität führt. Durch den Kugelkopfabschnitt 1 mit dem dort bogenförmig verlaufenden Schneidenabschnitten ist dabei sogar die Herstellung von Hinterschnitten am zu fertigenden Zahnersatzteil möglich, wenn der Schaftfräser an einer entsprechenden, beispielsweise fünfachsigen CNC-Fräsmaschine eingesetzt wird, die eine Neigung des Dentalfräsers gegenüber dem Werkstück während des Bearbeitungsvorgangs erlaubt.
Aufgrund der staubförmigen Zerspanung von Keramikweißlingen, für die der Dentalfräser gemacht ist, verstopfen die Spannuten 4 dabei trotz der Linksverdrallung auch dann nicht, wenn von oben ins volle Material gefahren wird, ohne das dabei eine Spanabfuhr nach unten möglich ist.

So wäre es beispielsweise denkbar, den Durchmesser Ds des Schaftabschnitts 3 gleich groß zu wählen wie den größten Außendurchmesser Dk des Kugelkopfabschnitts 1 und somit einen Schaftfräser mit fast über seine ganze Länge gleichem Außendurchmesser herzustellen. Kleiner sollte der Durchmesser jedoch nicht gewählt werden, um die Stabilität des Werkzeugs nicht zu gefährden. Während mit dem Drallwinkel b von 25° und im Bereich von 5° bis 30° darum herum in Versuchen an Zirkondioxidronden besonders gute Arbeitsergebnisse erzielt worden sind ist es denkbar, diesen in weiten Grenzen zu variieren, solange es bei einem Linksdrall zur Rechtsschneidrichtung des Dentalfräsers bleibt und damit bei einer Druckbelastung auf die zu bearbeitende, vorgesinterte Keramikronde beim Eintauchen des Dentalfräsers ins volle Material von oben her.

## Patentansprüche

1. Fräsverfahren zum Herstellen von Zahnersatzteilen, wobei auf einer mehrachsigen CNC-Fräsmaschine mit einem zum Bearbeiten von vorgesinterten Keramikweißlingen geeigneten Dentalfräser mittels 3D-Freiformfräsen entlang generierter Verfahrwege ein noch zum fertigen Zahnersatzteil durchzusinternder Zahnersatzteilweißling aus einem vorgesinterten Keramikweißling herausgefräst wird, wobei der Keramikweißling plattenförmig oder als Ronde vorliegt, und wobei mit dem Dentalfräser von oben in das volle Material des Keramikweißlings gefahren wird, wobei der Keramikweißling zuvor entsprechend aufgespannt wird und anschließend durch schichtweises Abtragen von Material entlang der generierten Verfahrwege der Zahnersatzteilweißling aus dem Keramikweißling herausgefräst wird,
**dadurch gekennzeichnet, dass** der Dentalfräser einen halbkugelförmig abgerundeten Kugelkopfabschnitt (1) aufweist, welcher mit seinem größten Außendurchmesser (Dk) von ca. 1 - 4 mm in einen in Axialrichtung konstant mit diesem Durchmesser (Dk) am Außenumfang verlaufenden Axialschneidabschnitt (2) übergeht, an den ein sich axial mit einem größeren oder zumindest gleich großen Schaftdurchmesser (Ds) erstreckender Schaftabschnitt (3) anschließt, wobei
der Dentalfräser insgesamt drei oder bevorzugt nur zwei Spannuten (4) und eine entsprechende Anzahl Schneidkeile (5) aufweist, die vom Kugelkopfabschnitt (1) entlang des Axialschneidabschnitts (2) um einen aus Vollmaterial bestehenden Kernabschnitt (9) kreisförmigen Querschnitts herumgewendelt sind, und wobei an der der Spannut (4) in Rechtsdrehrichtung zugewandten Außenkante jedes Schneidkeils (5) eine sich im Kugelkopfabschnitt (1) in Axialrichtung gesehen bogenförmig und im Axialschneidabschnitt (2) auf der Radialkoordinate des größten Außendurchmesser (Dk) erstreckende Schneide (6) vorgesehen ist, und wobei alle Spannuten (4) und Schneidkeile (5) mit einem Linksdrall gewendelt sind, wobei der Drallwinkel (b) 1° - 45° beträgt.

2. Fräsverfahren nach Anspruch 1, **dadurch gekennzeichnet, dass** der Keramikweißling ein Zirkondioxidweißling ist.

3. Fräsverfahren nach Anspruch 1 oder 2, **dadurch gekennzeichnet, dass** der größte Außendurchmesser (Dk) des Kugelkopfabschnitts (1) des verwendeten Dentalfräsers 2 - 3 mm beträgt.

4. Fräsverfahren nach Anspruch 1, 2 oder 3, **dadurch gekennzeichnet, dass** der Drallwinkel (b) 5° bis 30° beträgt.

5. Fräsverfahren nach einem der vorhergehenden Ansprüche, **dadurch gekennzeichnet, dass** der noch zum fertigen Zahnersatzteil durchzusinternde Zahnersatzteilweißling mit einem einzigen Dentalfräser ausgefräst wird.

6. Fräsverfahren nach einem der vorhergehenden Ansprüche, **dadurch gekennzeichnet, dass** der ausgefräste Zahnersatzteilweißling danach zum fertigen Zahnersatzteil durchgesintert wird.

7. Fräsverfahren nach einem der vorhergehenden Ansprüche, **dadurch gekennzeichnet, dass** der Kugelkopfabschnitt (1), der Axialschneidabschnitt (2) und der Schaftabschnitt (3) des Dentalfräsers insgesamt einstückig urgeformt aus einem Material bestehen, insbesondere aus Hartmetall.

8. Fräsverfahren nach einem der vorhergehenden Ansprüche, **dadurch gekennzeichnet, dass** an jeder der Schneiden (6) des Dentalfräsers ein Freischliff (7), insbesondere von 0,1 mm Breite oder kleiner, insbesondere mit einem Freiwinkel von 12°-25° vorgesehen ist.

9. Fräsverfahren nach einem der vorhergehenden Ansprüche, **dadurch gekennzeichnet, dass** zumindest im Axialschneidabschnitt (2) des Dentalfräsers an jeder der Schneiden (6) ein Spanwinkel 8° bis 25° vorgesehen ist.

10. Fräsverfahren nach einem der vorhergehenden Ansprüche, **dadurch gekennzeichnet, dass** der Kernabschnitt des Dentalfräsers einen Außenumfang mit einem Durchmesser von ca. 40 bis 65% bevorzugt 50% - 65% oder sogar 55% - 65% des Außenumfangs des Werkzeugs im Axialschneidabschnitt und am Übergang zum Kugelkopfabschnitt aufweist.

11. Fräsverfahren nach einem der vorhergehenden Ansprüche, **dadurch gekennzeichnet, dass** jede Schneide (6) des Dentalfräsers über eine rückseitig direkt oder an den Freischliff (7) anschließende Freifläche (8) in die dort entgegen der Rechtsdrehrichtung gelegene Spannut (4) übergeht.

12. Fräsverfahren nach einem der vorhergehenden Ansprüche, **dadurch gekennzeichnet, dass** der Dentalfräser als Zweischneider ausgebildet ist und im Axialschneidabschnitt (2) der rückseitige Übergang vom Außendurchmesser (Dk) an der Schneide (6) auf den Kerndurchmesser (dk) in der Spannut (4) über einen insbesondere bogenabschnittsförmigen Übergangsbereich erfolgt, welcher gegebenfalls an den Freischliff oder die Freifläche (8) anschließt, wobei der um 90° in Umfangsrichtung zum größten Außendurchmesser (Dk) an den Schneiden (6) versetzte Außendurchmesser (Dm) am Übergangsbereich 65-85%, insbesondere ca. 75 % des größten Außendurchmessers (Dk) beträgt.

13. Fräsverfahren nach einem der vorhergehenden Ansprüche, **dadurch gekennzeichnet, dass** die Schneiden (6) des Dentalfräsers eine Länge (L) in Axialrichtung aufweisen, die mindestens 50% - 150%, vorzugsweise 100% - 150% des größten Außendurchmessers (Dk) entspricht.

14. Fräsverfahren nach einem der vorhergehenden Ansprüche, **dadurch gekennzeichnet, dass** zumindest im Bereich des Kugelkopfabschnitts des Dentalfräsers eine Verschleißschutzbeschichtung, insbesondere eine Hartstoffschicht, wie z.B: aus Diamant oder kubischem Bornitrit vorgesehen ist.

## Claims

1. Milling method for the manufacture of dental prostheses, wherein, on a multi-axis CNC-milling machine, with a dental milling tool for machining pre-sintered ceramic white bodies using 3D free-form milling along generated travel paths, a dental prosthesis white body is milled out of a pre-sintered ceramic white body, wherein the ceramic white body is provided in the form of a plate or a round blank, and wherein the dental milling tool is driven from above into the solid material of the ceramic white body and, prior to this, the ceramic white body is clamped, and, subsequently, by layer-wise removal of material along the generated paths, the dental prosthesis white body is milled out of the ceramic white body, **characterized in that**
the dental milling tool comprises a hemispherical rounded ball end portion (1), which, with its largest outside diameter (Dk) of about 1-4 mm, goes over into an axial cutting portion (2) axially extending constantly with this diameter (Dk) on its outer circumference, wherein a shank portion (3) adjoins to the axial cutting portion (2) having a larger or at least equally large shank diameter (Ds), wherein
the dental milling tool further comprises a total of three, preferably only two chip flutes (4) and a corresponding number of cutting teeth (5), which, from the ball-head portion (1) along the axial cutting portion (2), are coiled around a web portion (9) consisting of solid material and having a circular cross-section, and wherein, at such outer edge of each cutting tooth (5) facing the flute (4) in direction of clockwise rotation, a cutting edge (6) is provided, being in the ball end portion (1) arcuate, seen in axial direction, and being in the axial cutting portion (2) on the radial coordinate of the maximum outside diameter (Dk), and wherein
all the flutes (4) and the cutting teeth (5) are coiled with a left-hand twist, the twist angle (b) is 1° - 45°.

2. Milling method according to claim 1, **characterized in that** ,the ceramic white body is a zirconium oxide white body.

3. Milling method according to claim 1 or 2, **characterized in that** the largest outside diameter (Dk) of the ball end portion (1) is 2 - 3 mm.

4. Milling method according to claim 1, 2 or 3, **characterized in that** the twist angle (b) is 5° to 30°.

5. Milling method according to one of the preceding claims, **characterized in that** the dental prosthesis white body, which afterwards has to be fully-sintered to the finished dental prosthesis, is milled out with a single dental milling tool.

6. Milling method according to one of the preceding claims, **characterized in that** the milled dental prosthesis white body is subsequently fully-sintered into the finished dental prosthesis.

7. Milling method according to one of the preceding claims, **characterized in that** the ball end portion (1), the axial cutting portion (2) and the shank portion (3) of the dental milling tool are integrally master formed of one material, in particular of a hard metal.

8. Milling method according to one of the preceding claims, **characterized in that** at each of the cutting edges (6) of the dental milling tool a clearance (7) is provided, in particular of 0.1 mm width or less, in particular with a clearance angle of 12° - 25°.

9. Milling method according to one of the preceding claims, **characterized in that** on each of the cutting edges (6), at least in the axial cutting portion (2) of the dental milling tool, a rake angle of 8° to 25° is provided.

10. Milling method according to one of the preceding claims, **characterized in that** the web portion of the dental milling tool has an outer circumference with a diameter of about 40 to 65%, preferably 50% - 65% or even 55% - 65% of such of the outer circumference of the tool in the axial cutting portion and at the transition into the ball end portion.

11. Milling method according to one of the preceding claims, **characterized in that** a transition of each cutting edge (6) of the dental milling tool into a corresponding flute (4) in direction against the clockwise direction of rotation is via a clearance surface directly adjoining on the backside or via a clearance surface (8) adjoining on the backside of the clearance (7).

12. Milling method according to one of the preceding claims, **characterized in that** the dental milling tool is formed as a double flute mill and, in the axial cutting portion (2), the backward transition from the outer diameter (Dk) of the cutting edge (6) to the web diameter (dk) in the flute (4) is via a particular arc segment-shaped transition region, which might adjoin the clearance or the clearance surface (8) if existing, wherein an outer diameter (Dm) being displaced 90° in the circumferential direction as against the largest outer diameter (Dk) on the cutting edges (6) is at the transition region 65-85%, in particular approximately 75% of the largest outer diameter (Dk).

13. Milling method according to one of the preceding claims, **characterized in that** the cutting edges (6) of the dental milling tool have a length (L), which equates in the axial direction at least 50% to 150% of the largest outer diameter (Dk), in particular 100% to 150% of the largest outer diameter (Dk).

14. Milling method according to any one of the preceding claims, **characterized in that** at least in the region of the ball end portion of the dental milling tool a wear protection coating is provided, in particular a coating of hard material, such as of diamond or cubic boron nitride.

## Revendications

1. Procédé de fraisage destiné à fabriquer des pièces de prothèse dentaire, dans lequel, sur une fraiseuse CNC à plusieurs axes comprenant une fraise dentaire se prêtant à l'usinage d'ébauches blanches préfrittées en céramique, une ébauche blanche de prothèse dentaire devant encore être soumise à un frittage de finition pour obtenir une pièce de prothèse dentaire finie est fraisée à partir d'une ébauche blanche préfrittée en céramique, par fraisage libre tridimensionnel suivant des chemins de déplacement générés, dans lequel ladite ébauche blanche en céramique est présente sous forme de plaque ou de flan circulaire, et dans lequel on fait passer d'en haut la fraise dentaire dans le matériau plein de l'ébauche blanche en céramique, dans lequel l'ébauche blanche en céramique est d'abord serrée de manière correspondante et, ensuite, en enlevant par couches de la matière le long des chemins de déplacement générés, l'ébauche blanche de pièce de prothèse dentaire est fraisée à partir de l'ébauche blanche en céramique,
**caractérisé par le fait que** la fraise dentaire présente une section de tête sphérique (1) arrondie hémisphérique qui se prolonge par son plus grand diamètre extérieur (Dk) d'à peu près 1 à 4 mm en formant une portion de coupe axiale (2) qui s'étend en conservant ce diamètre (Dk) sur la circonférence extérieure dans la direction axiale et qui est suivie d'une portion de queue (3) s'étendant axialement et présentant un diamètre de queue (Ds) plus important ou au moins égal, dans lequel
la fraise dentaire présente dans l'ensemble trois ou, de préférence, seulement deux rainures à copeaux (4) et un nombre correspondant de taillants (5) qui sont spiralés autour d'une portion centrale (9) constituée d'un matériau massif et présentant une section transversale circulaire, à partir de ladite portion de tête sphérique (1) le long de ladite portion de coupe axiale (2), et dans lequel, sur le bord extérieur de chaque taillant (5), qui montre vers la rainure à coupeaux (4) dans le sens de rotation à droite, est prévu un tranchant (6) qui, vu dans la direction axiale, s'étend en arc dans la portion de tête sphérique (1) et, dans la portion de coupe axiale (2), sur la coordonnée radiale du plus grand diamètre extérieur (Dk), et dans lequel l'ensemble des rainures à copeaux (4) et taillants (5) sont spiralés avec une torsion à gauche, l'angle de torsion (b) étant compris entre 1° et 45°.

2. Procédé de fraisage selon la revendication 1, **caractérisé par le fait que** l'ébauche blanche en céramique est une ébauche blanche en dioxyde de zirconium.

3. Procédé de fraisage selon la revendication 1 ou 2, **caractérisé par le fait que** le plus grand diamètre extérieur (Dk) de la portion de tête sphérique (1) de la fraise dentaire utilisée est compris entre 2 et 3 mm.

4. Procédé de fraisage selon la revendication 1, 2 ou 3, **caractérisé par le fait que** l'angle de torsion (b) est compris entre 5° et 30°.

5. Procédé de fraisage selon l'une quelconque des revendications précédentes, **caractérisé par le fait que** l'ébauche blanche de pièce de prothèse dentaire qui doit encore être soumise à un frittage de finition pour obtenir une pièce de prothèse dentaire finie est fraisée au moyen d'une seule fraise dentaire.

6. Procédé de fraisage selon l'une quelconque des revendications précédentes, **caractérisé par le fait que** l'ébauche blanche de pièce de prothèse dentaire fraisée est ensuite soumise à un frittage de finition pour obtenir la pièce de prothèse dentaire finie.

7. Procédé de fraisage selon l'une quelconque des revendications précédentes, **caractérisé par le fait que** la portion de tête sphérique (1), la portion de coupe axiale (2) et la portion de queue (3) de la fraise dentaire, formées initialement dans l'ensemble en une seule pièce, sont réalisées à partir d'un matériau, en particulier de métal dur.

8. Procédé de fraisage selon l'une quelconque des revendications précédentes, **caractérisé par le fait que** sur chacun des tranchants (6) de la fraise dentaire est prévu un détalonnage (7), en particulier d'une largeur de 0,1 mm ou moins, en particulier avec un angle de dépouille compris entre 12° et 25°.

9. Procédé de fraisage selon l'une quelconque des revendications précédentes, **caractérisé par le fait que**, au moins dans la portion de coupe axiale (2) de la fraise dentaire, un angle de coupe compris entre 8° et 25° est prévu sur chacun des tranchants (6).

10. Procédé de fraisage selon l'une quelconque des revendications précédentes, **caractérisé par le fait que** la portion centrale de la fraise dentaire présente une circonférence extérieure ayant un diamètre compris entre environ 40 et 65%, de préférence entre 50 % et 65 % ou même entre 55 % et 65 % de la circonférence extérieure de l'outil dans la portion de coupe axiale et sur la transition à la portion de tête sphérique,

11. Procédé de fraisage selon l'une quelconque des revendications précédentes, **caractérisé par le fait que** chaque tranchant (6) de la fraise dentaire passe par une face de dépouille (8) qui, sur la face arrière, est directement contiguë ou contiguë au détalonnage (7), dans la rainure à copeaux (4) y située à l'encontre du sens de rotation à droite.

12. Procédé de fraisage selon l'une quelconque des revendications précédentes, **caractérisé par le fait que** la fraise dentaire est réalisée en tant que fraise à deux tranchants et que, dans la portion de coupe axiale (2), la transition arrière du diamètre extérieur (Dk) sur le tranchant (6) au diamètre de noyau (dk) dans la rainure à copeaux (4) se fait par une zone de transition en particulier en forme de portion d'arc qui, le cas échéant, est contiguë au détalonnage ou à la face de dépouille (8), dans lequel le diamètre extérieur (Dm) sur la zone de transition qui est décalé de 90° dans la direction circonférentielle vers le plus grand diamètre extérieur (Dk) sur les tranchants (6), est compris entre 65 et 85 %, en particulier est d'environ 75% du plus grand diamètre extérieur (Dk).

13. Procédé de fraisage selon l'une quelconque des revendications précédentes, **caractérisé par le fait que** les tranchants (6) de la fraise dentaire présentent une longueur (L) dans la direction axiale qui correspond au moins à 50 % 150 %, de préférence à 100 % - 150 % du plus grand diamètre extérieur (Dk).

14. Procédé de fraisage selon l'une quelconque des revendications précédentes, **caractérisé par le fait qu'**un revêtement de protection contre l'usure, en particulier une couche en matériau dur, comme par exemple en diamant ou en nitrite de bore cubique, est prévu au moins au niveau de la portion de tête sphérique de la fraise dentaire.
